# EUROPEAN PATENT SPECIFICATION

(11) **EP 0 455 157 B1**
(45) Date of publication and mention of the grant of the patent: **28.06.1995**
(21) Application number: 91106782.5
(22) Date of filing: 26.04.1991
(51) Int. Cl.: H04N 1/00, H04M 1/72, H04N 1/32

(54) **Facsimile apparatus**
Faksimilegerät
Dispositif de fac-similé

(30) Priority: 28.04.1990 JP 113071/90
(43) Date of publication of application: 06.11.1991
(73) Proprietor: SHARP KABUSHIKI KAISHA, Osaka 545 (JP)
(72) Inventor: Kotani, Matahira, Ikoma-gun, Nara-ken (JP)
(74) Representative: TER MEER STEINMEISTER & PARTNER GbR

(56) References cited:
- EP-A- 0 262 839
- EP-A- 0 265 963
- EP-A- 0 328 069
- DE-A- 3 930 624
- EUROCON 88, 8TH EUROPEAN CONFERENCE ON ELECTROTECHNICS, CONFERENCE PROCEEDINGS ON AREA COMMUNICATION, STOCKHOLM, SWEDEN, JUNE 13-17, 1988, IEEE pages 379-382; HEINZ OCHSNER: "CORDLESS TELECOMMUNICATIONS: TOWARDS A DIGITAL STANDARD"

## Description

### BACKGROUND OF THE INVENTION

### Field of the Invention

The present invention relates to a facsimile apparatus.

### Description of the Related Art

In recent years, a facsimile apparatus has widely spread as an image transmission apparatus. Since a telephone line is used as a communication channel for the facsimile apparatus, the facsimile apparatus is required to be placed near an inlet of the telephone line in a room. If the facsimile apparatus is placed apart from the inlet, it is necessary to lay extension wires.

In order to eliminate such positional restriction of the facsimile apparatus in relation to the connection to the telephone line, it is possible to employ what is called a cordless system which has recently been put to practical use in a telephone and so on. In the cordless system, a facsimile apparatus is composed of a parent machine and a child machine. The parent machine is connected to a telephone line, and has a cordless transmission/reception circuit. On the other other hand, the child machine has a cordless transmission/reception circuit corresponding to the transmission/reception circuit of the parent machine, and has a facsimile function unit including a scanner, a printer, a FAX modem, a network control unit (NCU) etc. Signals are transmitted by radio communication between the parent machine and the child machine. According to the above arrangement, it is possible to eliminate the above-mentioned restriction and to remarkably enhance the operability of the facsimile apparatus.

However, there is restriction on the frequency band of radio signals transmitted between the parent machine and the child machine of the above cordless system for the purpose of preventing jamming due to noises and radio interference. The data transmission speed of the facsimile apparatus is restricted by the restriction on the frequency band of the cordless system and a required frequency band which is determined by the type of modulation and demodulation process of the facsimile apparatus. In the case of facsimile transmission, the required frequency band is approximately 3 KHz with a data transmission speed of 4800 bps (8-phase shift keying). It meets the restriction of the frequency band of radio signals in the cordless system. However, if the data transmission speed is, for example, 9600 bps (quadrature amplitude modulation (QAM)) for realizing more rapid transmission, the required frequency band is greater than 3.4 KHz. It does not meet the restriction of the frequency band of the cordless system. Therefore, it is difficult to carry out high speed data transmission in a facsimile apparatus which uses a cordless system.

### SUMMARY OF THE INVENTION

An object of the present invention is to provide a facsimile apparatus which is free from the positional restriction, and is capable of carrying out high speed data communication by a telephone line.

In order to achieve the above object, there is provided a facsimile apparatus having a telephone function for transmitting and receiving voice signals through a telephone line and a facsimile function for transmitting and receiving image signals through the telephone line, which comprises a parent machine connected to the telephone line and having the telephone function, and a child machine coupled to the parent machine by radio and having the telephone function and the facsimile function. The parent machine includes a memory means for temporarily storing image signals received through the telephone line and image signals received from the child machine to be transmitted to the telephone line.

Since a facsimile apparatus according to the present invention is in the form of a cordless system having a child machine and a parent machine coupled to each other by radio communication, it is possible to install the facsimile apparatus in an any place remote from an inlet of a telephone line without laying extension wires, thereby improving the operability of the facsimile apparatus.

Furthermore, since signals transmitted through the telephone line and signals transmitted from the child machine to the parent machine are temporarily stored in the memory means, it is possible to set the transmission speed to a value for performing high speed communication on the telephone line without being affected by the restriction on the frequency band of radio signals transmitted between the parent machine and the child machine in the cordless system. As a result, telephone charges are reduced, and, since a period of communication time is shortened, the busy state of the telephone line is reduced.

Further objects and advantages of the present invention will be apparent from the following description, reference being had to the accompanying drawings wherein a preferred embodiment of the present invention is clearly shown.

### BRIEF DESCRIPTION OF THE DRAWINGS

Fig. 1 is a block diagram showing the construction of a facsimile apparatus according to an embodiment of the present invention;
Fig. 2 is a flow chart in explanation of a transmitting operation of the facsimile apparatus of Fig. 1; and
Fig. 3 is a flow chart in explanation of receiving operation of the facsimile apparatus of Fig. 1.

### DESCRIPTION OF THE PREFERRED EMBODIMENTS

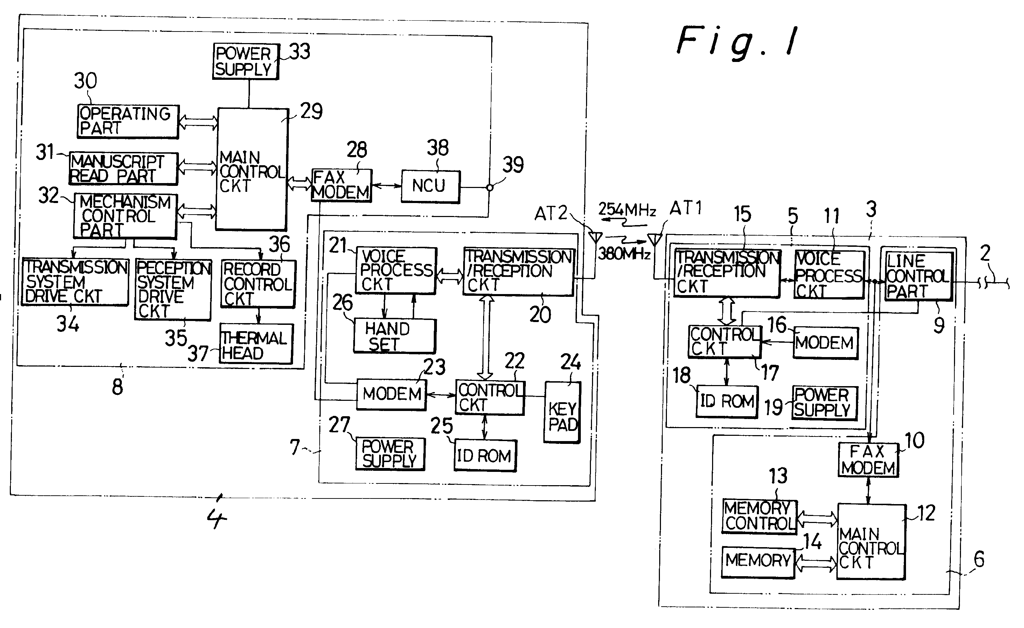

Fig. 1 is a block diagram showing the construction of a facsimile apparatus 1 according to an embodiment of the present invention. The facsimile apparatus 1 forms what is called a cordless system and comprises a parent machine 3 connected to a telephone line 2, and a child machine 4 coupled to the parent machine 3 by radio communication. The parent machine 3 has a cordless transmission/reception unit 5 for radio communication and a memory unit 6 for temporarily storing image signals to be transmitted to the telephone line 2 or the child machine 4. The child machine 4 has a cordless transmission/reception unit 7 for radio communication and a facsimile function unit 8 for performing transmission and reception of image data to and from another facsimile apparatus.

The construction of the parent machine 3 will now be described. The telephone line 2 is connected to a line control part 9 in the memory unit 6. The line control part 9 comprises a NCU (Network Control Unit), a call signal detection circuit, a CML relay, an automatic dial transmission circuit and so on. When a signal transmitted through the telephone line 2 is detected by the call signal detection circuit in the line control part 9, it is determined, for example, by detecting the presence of a CNG signal whether the signal is a facsimile signal or a speech signal, and the CML relay is switched accordingly. One end of the CML relay is connected to a FAX modem 10 in the memory unit 6, and the other end of the CML relay is connected to an audio processing circuit 11 in the cordless transmission/reception unit 5.

Facsimile signals transmitted through the telephone line 2 are supplied to the FAX modem 10 which is connected to a main control circuit 12. The main control circuit 12 identifies the signals from the FAX modem 10, activates a memory control circuit 13, converts facsimile signals transmitted through the line control part 9 into binary signals in the FAX modem 10, and temporarily stores the binary signals in a memory device such as an IC card and a floppy disk, or in a semiconductor memory 14 such as a SRAM and a DRAM. The memory 14 may be, for example, a digital audio tape recorder (DAT). After the transmitted facsimile signals are temporarily stored in the memory 14, they are read out from the memory 14 again and supplied to the cordless transmission/reception unit 5.

The facsimile signals read out from the memory 14 and modulated by a frequency modulation modem 16, and voice signals transmitted through the telephone line 2 are supplied to the voice processing circuit 11 of the cordless transmission/reception unit 5. The voice processing circuit 11 which includes a limiter and a compander (a compressor circuit and an expander circuit) processes voice signals received through the line control part 9 and voice signals received through a transmission/reception circuit 15. Further, received control signals are supplied to a control circuit 17 through the modem 16. The control circuit 17 controls the operations of the parent machine 3 based on control signals received through the modem 16 and control signals received from the transmission/reception circuit 15.

An identification code (ID) code assigned to each cordless system which is designated by the Minister of Posts and Telecommunications is stored in an ID ROM 18, and transferred to the child machine 4 when connection of a radio line is made for collation.

The transmission/reception circuit 15 comprises a reception part and a transmission part. The reception part demodulates signals received by an antenna AT1 and supplies them to the voice processing circuit 11 and the control circuit 17. The transmission part modulates signals received from the voice processing circuit 11 and the control circuit 17, and transmits them from the antenna AT1 at a frequency of, for example, 254 MHz.

On the other hand, as described below, facsimile signals transmitted from the child machine 4 to the parent machine 3 by radio communication are modulated, and thereafter, converted into binary signals in the FAX modem 10, and stored in the memory 14. After that, the circuit of the other facsimile apparatus is opened by an automatic dial operation of the automatic dial transmission circuit of the line control part 9, and the facsimile signals are read out from the memory 14 and delivered.

Electric power is supplied from a power source circuit 19 to the above respective parts of the cordless transmission/reception unit 5.

The construction of the child machine 4 will now be described. Facsimile signals, voice signals and control signals received by an antenna AT2 in radio communication with the parent machine 3 are supplied to a reception part of a transmission/reception circuit 20 and demodulated there. The facsimile signals and the voice signals are supplied to a voice processing circuit 21 and the control signals are supplied to a control circuit 22. A transmission part of the transmission/reception circuit 20 modulates facsimile signals and control signals from the voice processing circuit 21 and the control circuit 22 and transmits them from the antenna AT2 at, for example, 380 MHz. The control circuit 22 controls the operations of the child machine 4 based on control signals from the reception part of the transmission/reception circuit 20, control signals received through a modem 23 and input key pulses from a keypad 24.

An identification code (ID) code assigned to each cordless system which is designated by the Minister of Posts and Telecommunications is stored in an ID ROM 25, and transferred to the parent machine 3 when connection of a radio line is made for collation.

The voice processing circuit 21 processes voice signals from the transmission/reception circuit 20 and control signals received from the control circuit 22 through the modem 23, and outputs them from a transmitter of a handset 26, and processes voice signals from a receiver from the handset 26 and supplies them to the transmission part of the transmission/reception circuit 20. The keypad 24 has numeric keys and mode setting keys, and supplies a signal having an individual frequency in response to each key input to the control circuit 22.

Electric power is supplied from a power source circuit 27 to the above respective parts of the cordless transmission/reception unit 7.

On the other hand, facsimile signals transmitted from the parent machine 3 by radio communication are supplied to a FAX modem 28 of the facsimile function unit 8 through the modem 23 which carries out frequency modulation. The FAX modem 28 is connected to a main control circuit 29 which identifies signals from the FAX modem 28 and controls operations of an operating part 30 and a mechanism control part 32. Furthermore, the main control circuit 29 controls operations of a manuscript reading part 31 and the mechanism control part 32 in accordance with an operation by the operating part 30 at the time of transmitting an image signal. electric power is supplied from a power source circuit 33 to the main control circuit 29.

For recording received facsimile signals, the mechanism control part 32 controls a reception system drive circuit 35 based on signals from the FAX modem 28, drives an unillustrated feed roller to feed a recording paper. Furthermore, the mechanism control part 32 controls a recording control circuit 36 and drives a thermal head 37. Thus, the facsimile signals demodulated by the FAX modem 28 are recorded in succession by the thermal head 37 onto the recording paper which is fed in synchronization with the recording speed.

The operating part 30 which has numeric keys, a display and so on, performs input processing and information display necessary for image signal transmission.

On the other hand, the manuscript reading part 31 optically reads an image on a manuscript to be transmitted by a read sensor comprising, for example, a charge coupled device (CCD). A transmission system drive circuit 34 is driven through the mechanism control part 32 based on an operation the operating part 30. The feed roller is thereby rotated and the manuscript is moved while an image on the manuscript is read. The image thus read is modulated by the FAX modem 28 and transferred to the parent machine 3 as facsimile signals in radio communication through the cordless transmission/reception unit 7. In this embodiment, the transferred facsimile signals are temporarily stored in the memory 14 of the memory unit 6. After the entire facsimile signals are transferred and stored in the memory 14, they are read out in succession and delivered through the telephone line 2.

A telephone line terminal 39 is connected to the FAX modem 28 through a NCU 38. The NCU 38 includes a call signal detection circuit, a CML relay and so on. Therefore, the facsimile function unit 8 can be used by itself as a facsimile apparatus by directly connecting the telephone line terminal 39 to the telephone line 2 without constituting a cordless system.

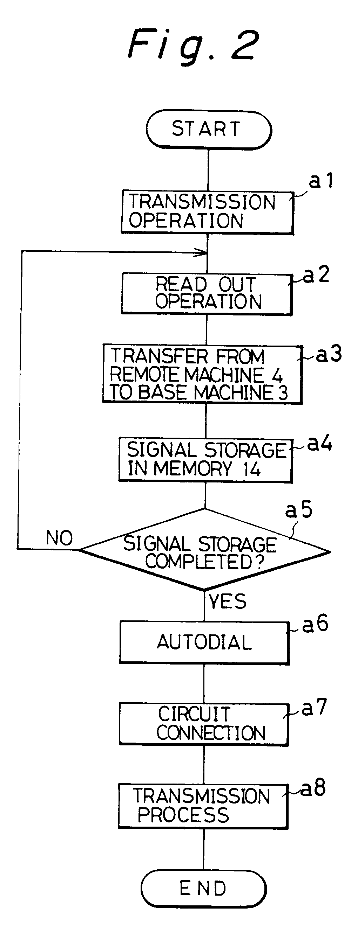

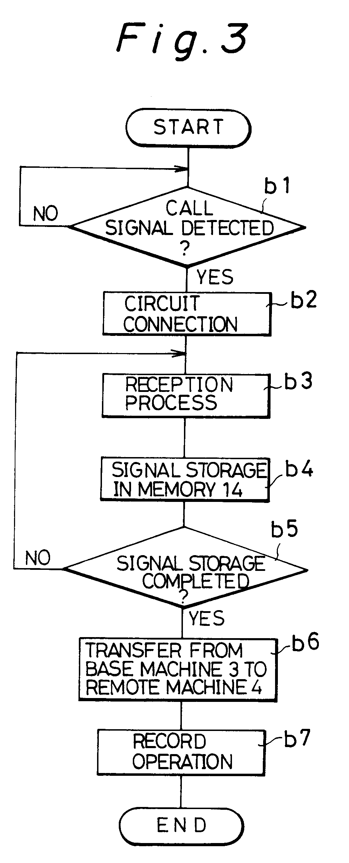

Figs. 2 and 3 are flow charts in explanation of the operation of the facsimile apparatus 1 according to this embodiment. Transmission operations of facsimile signals from the facsimile apparatus 1 will now be described with reference to Fig. 2. When a certain button of the operating part 30 is pressed in Step a1, the manuscript reading part 31 and the mechanism control part 32 are driven in Step a2 to perform an operation of reading an image to be transmitted.

Facsimile signals corresponding to the read image are transferred from the child machine 4 to the parent machine 3 in radio communication in Step a3. The transferred signals are temporarily stored in the memory 14 in Step a4. It is determined in Step a5 whether or not the entire facsimile signals to be transmitted are stored in the memory 14. This determination is made based on a read-out completion signal from the manuscript reading part 31, a control signal from the memory control circuit 13 and so on. If the result of the determination is negative, the operation returns to Step a2, and the above process is repeated. When the storage of the entire facsimile signals is completed, the operation proceeds to Step a6, where the telephone number of the other party is automatically dialed by the automatic dial transmission circuit of the line control part 9. And the line is connected in Step a7. After that, the facsimile signals stored in the memory 14 are modulated by the FAX modem 10 in Step a8 and delivered to the telephone line 2 in succession at a speed (for example, of 9600 bps) equivalent to or greater than the transmission speed (for example, of 4800 bps) of the radio communication between the parent machine and the child machine.

Thus, in this embodiment, the facsimile signals to be transmitted are temporarily stored in the memory 14, the line is opened by the automatic dial function, and thereafter, the image transmission is executed. Without such an automatic dial function, an operator cannot perform an input operation of the telephone number of the other party until the entire facsimile signals to be transmitted are stored in the memory 14. However, since the above automatic dial function makes it possible to previously register the telephone number of the other party through the operating part 30, it is possible to perform the input operation of the telephone number of the other party before the entire facsimile signals are stored in the memory 14.

Receiving operations of the facsimile signals transmitted to the facsimile apparatus 1 will now be described with reference to Fig. 3. It is determined in Step b1 whether or not a call signal is detected by the call signal detection circuit in the line control part 9. After the detection of the call signal, the line is connected in Step b2. The facsimile signals received through the line control part 9 are converted into binary signals by the FAX modem 10 in Step b3. The facsimile signals converted into binary signals by the FAX modem 10 are stored in the memory 14 in succession in Step b4.

It is determined in Step b5 whether or not the entire facsimile signals transmitted through the telephone line 2 are stored in the memory 14. This determination is made based on a control signal from the other party, a control signal from the memory control circuit 13 and so on. If the result of the determination is negative, the operation returns to Step b3, and the above process is repeated. After the storage of the entire facsimile signals is completed, the operation proceeds to Step b6, where the facsimile signals stored in the memory 14 are transferred from the parent machine 3 to the child machine 4 in succession at a speed (for example, 4800 bps) lower than the transmission speed (for example, 9600 bps) of the telephone line 2. After that, in Step b7, the recording control circuit 36 and so on are activated through the mechanism control part 32, so that the demodulated facsimile signals are recorded in succession on a recording paper which is fed in synchronization with the recording speed. The present invention is also applicable to an image transmission apparatus and a data transmission apparatus besides the facsimile apparatus.

Many widely different embodiments of the present invention may be constructed. It should be understood that the present invention is not limited to the specific embodiments described in this specification, except as defined in the appended claims.

## Claims

1. A facsimile apparatus (1) having a telephone function for transmitting and receiving a voice signal through a telephone line (2) and a facsimile function for transmitting and receiving an image signal through said telephone line, comprising:
a parent machine (3) connected to said telephone line (2) and having said telephone function; and
a child machine (4) coupled to said parent machine by radio and having said telephone function and said facsimile function;
wherein said parent machine includes memory means (6) for temporarily storing an image signal received through said telephone line (2) and an image signal received from said child machine (4) to be transmitted to said telephone line (2).

2. A facsimile apparatus according to claim 1, wherein each of said parent machine (3) and said child machine (4) has a modulation/demodulation device (10) for converting a signal to be transmitted between said parent machine and said child machine into a radio signal.

3. A facsimile apparatus according to claim 1, further comprising an automatic dial function for automatically dialing a previously registered telephone number by a predetermined operation.

4. A facsimile apparatus according to claim 1, wherein said parent machine performs data transmission through said telephone line at a speed equivalent to or greater than a data transmission speed between said parent machine and said child machine.

## Patentansprüche

1. Faksimilegerät (1) mit Telefonfunktion zum Senden und Empfangen eines Tonsignals über eine Telefonleitung (2), und mit Faksimilefunktion zum Senden und Empfangen eines Bildsignals über die Telefonleitung, mit:
- einer Hauptvorrichtung (3), die mit der Telefonleitung (2) verbunden ist und über die genannte Telefonfunktion verfügt und
- einer Untervorrichtung (4), die über Funk mit der Hauptvorrichtung verbunden ist und über die genannte Telefonfunktion und die genannte Faksimilefunktion verfügt;
- wobei die Hauptvorrichtung eine Speichereinrichtung (6) zum Zwischenspeichern eines über die Telefonleitung (2) empfangenen Bildsignals sowie eines Bildsignals, das von der Untervorrichtung (4) empfangen wird und an die Telefonleitung (2) zu übertragen ist, beinhaltet.

2. Faksimilegerät nach Anspruch 1, bei dem sowohl die Hauptvorrichtung (3) als auch die Untervorrichtung (4) über eine Modulations-/Demodulationsvorrichtung (10) zum Umsetzen eines Signals, das zwischen der Haupt- und der Untervorrichtung zu übertragen ist, in ein Funksignal verfügt.

3. Faksimilegerät nach Anspruch 1, ferner mit automatischer Wählfunktion zum automatischen Wählen einer vorab registrierten Telefonnummer mittels eines vorgegebenen Ablaufs.

4. Faksimilegerät nach Anspruch 1, bei dem die Hauptvorrichtung Datenübertragung über die Telefonleitung mit einer Geschwindigkeit vornimmt, die der Datenübertragungsgeschwindigkeit zwischen der Haupt- und der Untervorrichtung entspricht oder größer ist als diese.

## Revendications

1. Dispositif de télécopie (1) comprenant une fonction de téléphone pour transmettre et recevoir un signal de voix à travers une ligne téléphonique (2) et une fonction de télécopie pour transmettre et recevoir un signal d'image à travers ladite ligne téléphonique, comprenant:
une machine mère (3) connectée à ladite ligne téléphonique (2) et possédant ladite fonction de téléphone; et
une machine fille (4) couplée à ladite machine mère par radio et possédant ladite fonction de téléphone et ladite fonction de télécopie;
dans lequel ladite machine mère inclut des moyens de mémoire (6) pour mémoriser temporairement un signal d'image reçu à travers ladite ligne de téléphone (2) et un signal d'image reçu en provenance de ladite machine fille (4) et à transmettre vers ladite ligne téléphonique (2).

2. Dispositif de télécopie selon la revendication 1, dans lequel chacune desdites machines mère (3) et fille (4) comprend un dispositif de modulation/démodulation (10) pour convertir un signal à transmettre entre ladite machine mère et ladite machine fille en un signal radio.

3. Dispositif de télécopie selon la revendication 1, comprenant également une fonction de composition automatique de numéro pour composer automatiquement un numéro de téléphone précédemment enregistré, au moyen d'une opération prédéterminée.

4. Dispositif de télécopie selon la revendication 1, dans lequel ladite machine mère effectue une transmission de données à travers ladite ligne téléphonique à une vitesse équivalente ou supérieure à une vitesse de transmission de données entre ladite machine mère et ladite machine fille.
